# FASCICULE DE BREVET EUROPEEN

(11) **EP 3 635 764 B1**
(45) Date de publication et mention de la délivrance du brevet: **31.03.2021**
(21) Numéro de dépôt: 18724603.8
(22) Date de dépôt: 23.05.2018
(51) Int. Cl.: H01H 23/14, H01H 9/02, H02G 3/18

(54) **DISPOSITIF DE COMMANDE**
STEUERUNGSVORRICHTUNG
CONTROL DEVICE

(30) Priorité: 02.06.2017 FR 1754940
(43) Date de publication de la demande: 15.04.2020
(73) Titulaire: Legrand France, 87000 Limoges (FR); Legrand SNC, 87000 Limoges (FR)
(72) Inventeur: CLIQUENNOIS, Patrick, 87620 Sereilhac (FR)
(74) Mandataire: Jacobacci Coralis Harle
(86) Numéro de dépôt international: PCT/EP2018/063552
(87) Numéro de publication internationale: WO 2018/219748

(56) Documents cités:
- EP-A1- 1 619 704
- DE-U1-202004 005 837
- DE-U1-202011 109 300
- US-A1- 2009 189 542

## Description

La présente invention concerne les appareillages électriques.

Elle concerne plus particulièrement un dispositif de commande comprenant un boîtier renfermant au moins un interrupteur, et un doigt de commande mobile par rapport au boîtier et présentant au moins un élément tel qu'une nervure en saillie d'une face du doigt de commande orientée vers le boîtier.

### ARRIERE-PLAN TECHNOLOGIQUE

Le document CN105336520 décrit un dispositif de commande de ce type.

Dans ce document, le doigt de commande présente plusieurs nervures, dont certaines coopèrent avec des pattes élastiques d'une pièce intermédiaire montée sur le boîtier, tandis que d'autres coopèrent directement avec l'interrupteur.

On connait également du document DE 20 2004 005 837 U1 un interrupteur comprenant une touche basculante et un boîtier accueillant un module électronique.

La face du boîtier recouverte par la touche basculante présente des éléments d'actionnement en forme de W, dont la branche centrale comprend à la fois une zone d'appui pour recevoir un élément formé en saillie à partir de la touche basculante, et une zone d'action située au-dessus d'un élément de commutation du module électronique.

### OBJET DE L'INVENTION

Dans ce contexte, la présente invention propose un dispositif de commande tel que défini ci-dessus, caractérisé en ce que le boîtier comprend une région déformable à partir de laquelle s'étendent une première languette, agencée de manière à coopérer avec ledit élément dans une position au moins du doigt de commande, et une seconde languette (au moins en partie déplaçable) pour actionner l'interrupteur.

Dans un tel dispositif, le mouvement du doigt de commande (sous l'action de l'utilisateur) entraîne le déplacement et/ou la déformation de la première languette et par conséquent la déformation de la région déformable, ce qui provoque le déplacement et/ou la déformation de la seconde languette de manière à actionner l'interrupteur.

La seconde languette étant distincte de la première languette, la manière dont ces éléments interagissent est toutefois largement ajustable par le concepteur du dispositif, en jouant notamment sur la forme et l'agencement de la région déformable et des languettes, de sorte que le concepteur peut choisir librement le ressenti de l'utilisateur lorsqu'il déplace le doigt de commande pour actionneur l'interrupteur.

La conception proposée permet par ailleurs d'éviter une action directe d'un élément tel qu'une nervure du doigt de commande sur l'interrupteur et limite ainsi les risques d'endommagement de ce dernier.

D'autres caractéristiques non limitatives et avantageuses de ce dispositif de commande sont les suivantes :
- la première languette et la seconde languette s'étendent parallèlement l'une à l'autre et/ou à distance l'une de l'autre ;
- ledit élément en saillie est une nervure (ou, en variante, un pion, un picot ou un croisillon) ;
- le doigt de commande comprend un autre élément en saillie (par exemple une autre nervure) ;
- une troisième languette (distincte de la première languette et de la seconde languette), éventuellement déformable, s'étend à partir de la région déformable et au droit dudit autre élément (par exemple au droit de ladite autre nervure) ;
- la première languette et la troisième languette sont situées de part et d'autre de la seconde languette;
- la première languette et/ou la seconde languette sont déformables (la seconde languette pouvant alors être déformable pour actionner l'interrupteur) ;
- le doigt de commande comporte une patte reçue dans un évidement du boîtier et présentant une première surface de contact orientée vers ladite face du doigt de commande ;
- la première languette est élastique et au contact dudit élément (au contact de ladite nervure dans l'exemple décrit ci-après) de manière à plaquer la première surface de contact contre une seconde surface de contact formée sur le boîtier et délimitant ledit évidement ;
- la région déformable, la première languette et la seconde languette sont formées dans une paroi avant du boîtier ;
- le doigt de commande comporte un muret s'étendant sur la périphérie du doigt de commande en entourant ladite paroi avant ;
- l'interrupteur est porté par un circuit imprimé monté dans le boîtier ;
- l'interrupteur est un microrupteur ;
- la seconde languette présente une excroissance orientée vers l'interrupteur ;
- la région déformable est délimitée partiellement par une pluralité de découpes ;
- ladite face du doigt de commande comporte un élément supplémentaire en saillie (tel qu'une nervure supplémentaire) ;
- le boîtier comprend une autre région déformable à partir de laquelle s'étendent une quatrième languette, agencée de manière à coopérer avec l'élément supplémentaire (c'est-à-dire la nervure supplémentaire dans l'exemple décrit), et une cinquième languette (au moins en partie déplaçable) pour actionner un autre interrupteur (ici un autre microrupteur monté sur le circuit imprimé) ;
- la quatrième languette et/ou la cinquième languette sont déformables (la cinquième languette pouvant alors être déformable pour actionner le circuit imprimé) ;
- le boîtier comporte au moins un pion partiellement entouré par un évidement ;
- ladite face du doigt de commande comporte une nervure de positionnement reçue dans ledit évidement.

### DESCRIPTION DETAILLEE D'EXEMPLES DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue en perspective éclatée d'un dispositif de commande conforme à l'invention ;
- la figure 2 est une vue en perspective éclatée d'un mécanisme d'appareillage du dispositif de commande de la figure 1 ;
- la figure 3 est une vue de face du dispositif de commande de la figure 1, sans sa plaque d'habillage ;

- la figure 4 est une vue du dispositif de commande de la figure 1 en coupe selon un plan E-E figuré sur la figure 3 ;
- la figure 5 est une vue du détail F montré sur la figure 4 ;
- la figure 6 est une vue arrière en perspective du doigt de commande du dispositif de commande de la figure 1 ;
- la figure 7 est une vue du dispositif de commande de la figure 1 en coupe selon un plan A-A figuré sur la figure 3 ;
- la figure 8 est une vue du détail B montré sur la figure 7;
- la figure 9 est une vue du dispositif de commande de la figure 1 en coupe selon un plan C-C figuré sur la figure 3 ; et
- la figure 10 est une vue du détail D montré sur la figure 9.

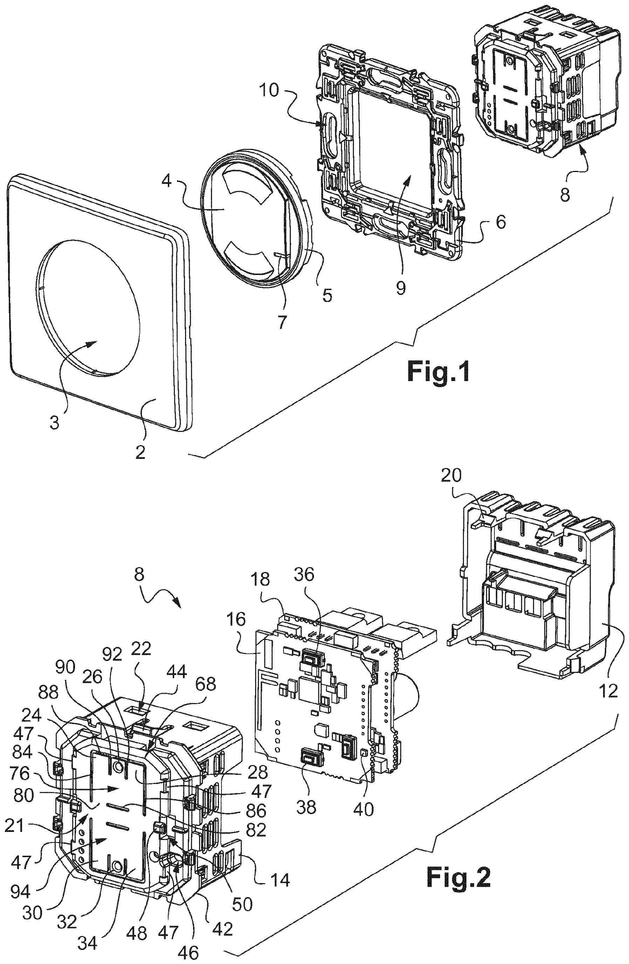

La figure 1 représente un dispositif de commande conforme à l'invention.

Comme bien visible sur cette figure, ce dispositif de commande comprend une plaque de finition 2, un doigt de commande 4, un support d'appareillage 6 et un mécanisme d'appareillage 8.

Dans la présente description, les termes « avant » et « arrière » seront utilisés par rapport à la direction du regard de l'usager vers la paroi murale sur laquelle est rapporté le dispositif de commande. Ainsi, lorsque le dispositif de commande sera installé dans une pièce, l'avant désignera le côté tourné vers l'intérieur de la pièce et l'arrière désignera le côté tourné à l'opposé, vers l'extérieur de la pièce.

Le support d'appareillage 6 présente la forme d'un cadre pourvu d'une ouverture centrale 9 et permet le montage du dispositif de commande dans un boîtier (non représenté), tel qu'une boîte d'encastrement destinée à être positionnée dans un évidement de la paroi murale où doit être installé le dispositif de commande. En variante, le boîtier peut être monté en saillie sur la paroi murale.

Pour ce faire, le support d'appareillage 6 comporte des orifices 10 en forme de trou de serrure au travers desquels peut s'étendre une vis de fixation reçue par ailleurs dans un fût prévu dans le boîtier précité.

Comme visible sur la figure 1, chaque orifice 10 comprend, d'une part, une partie oblongue qui reçoit le fût fileté de la vis concernée (cette partie oblongue s'étendant suivant un arrondi afin de permettre un rattrapage angulaire par coulissement du fût fileté dans cette partie oblongue arrondie), et, d'autre part, une partie d'extrémité circulaire autorisant le passage de la tête de la vis concernée.

Le dispositif de commande comprend par ailleurs ici une bague 5 montée sur le mécanisme d'appareillage 8 en entourant le doigt de commande 4. Cette bague 5 a une forme extérieure (ici circulaire) complémentaire d'une ouverture centrale 3 de la plaque de finition 2 et vient ainsi obturer l'espace formé (ici principalement latéralement) entre le doigt de commande 4 et le bord interne de cette ouverture centrale 3 (en laissant un jeu permettant le mouvement du doigt de commande 4).

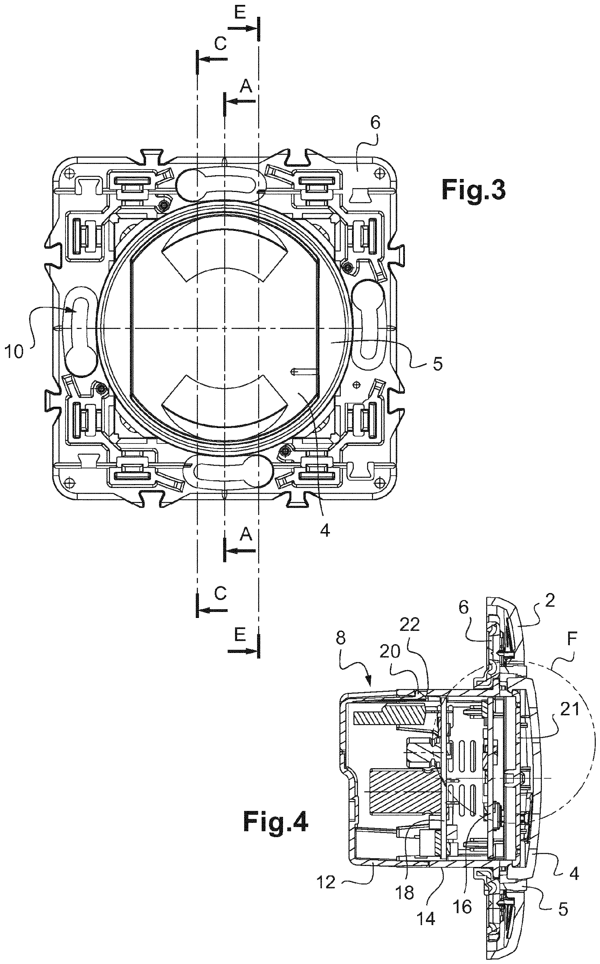

Comme visible sur les figures 2, 4, 7 et 9, le mécanisme d'appareillage 8 comprend un boîtier 12, 14 qui renferme des circuits électriques 16, 18, ici des circuits électroniques 16, 18.

Dans le mode de réalisation décrit, le boîtier est constitué de deux parties assemblées, à savoir une partie de fond 12 et un capot 14 assemblés par encliquetage, ici par la coopération de pattes élastiques 20 issues de la partie de fond 12 avec des ouvertures correspondantes 22 formées dans le capot 14.

Les deux parties du boîtier (c'est-à-dire la partie de fond 12 et le capot 14) sont ici réalisés en matière plastique.

Les circuits électroniques précités sont quant à eux réalisés sous forme de deux circuits imprimés 16, 18, qui portent chacun un ensemble de composants électroniques.

Le boîtier 12, 14 du mécanisme d'appareillage 8 comporte, ici au niveau de la paroi avant 21 du capot 14, une pluralité de languettes déformables 24, 26, 28, 30, 32, 34, comme décrit plus en détail ultérieurement. Ces languettes déformables 24, 26, 28, 30, 32, 34 sont réalisées en matière plastique comme déjà indiqué et présentent ainsi une certaine élasticité.

Le circuit imprimé 16 le plus proche de ces languettes déformables 24, 26, 28, 30, 32, 34 (c'est-à-dire situé vers l'avant) porte, sur sa face tournée vers les languettes déformables 24, 26, 28, 30, 32, 34 (c'est-à-dire vers l'avant), une pluralité d'interrupteurs, ici des microrupteurs 36, 38.

L'un au moins de ces microrupteurs (ici les microrupteurs 36, 38) est situé au droit d'une languette déformable (ici respectivement les languettes déformables 26, 32) lorsque le circuit imprimé 16 est monté dans le boîtier 12, 14.

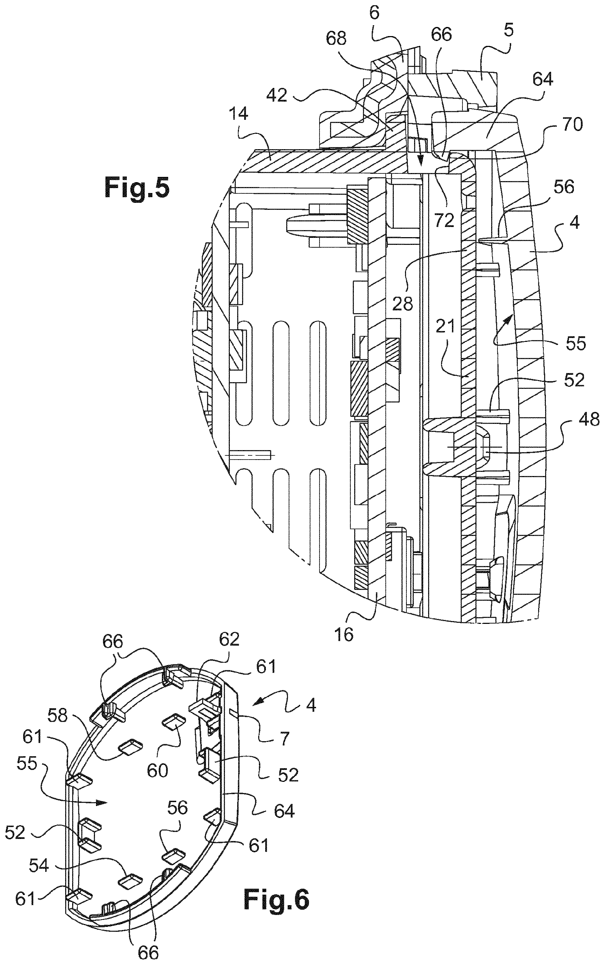

Comme visible sur la figure 2, la paroi avant 21 du mécanisme d'appareillage 8 (ici la paroi avant 21 du capot 14) définit également une ouverture débouchante 46 au droit d'une source de lumière 40 (réalisée ici sous forme d'une diode électroluminescente 40 montée sur le circuit imprimé 16). Comme expliqué plus loin en référence à la figure 6, cette ouverture débouchante 46 est destinée à laisser passer un guide de lumière 62 solidaire du doigt de commande 4 et dont l'extrémité avant affleure au niveau de la face avant du doigt de commande 4 de manière à former un voyant 7 (bien visible sur la figure 1).

Le boîtier 12, 14 du mécanisme d'appareillage 8 (ici précisément le capot 14) présente une collerette 42, formée sur tout le pourtour de la paroi avant 21 et en retrait (vers l'arrière) par rapport à la paroi avant 21.

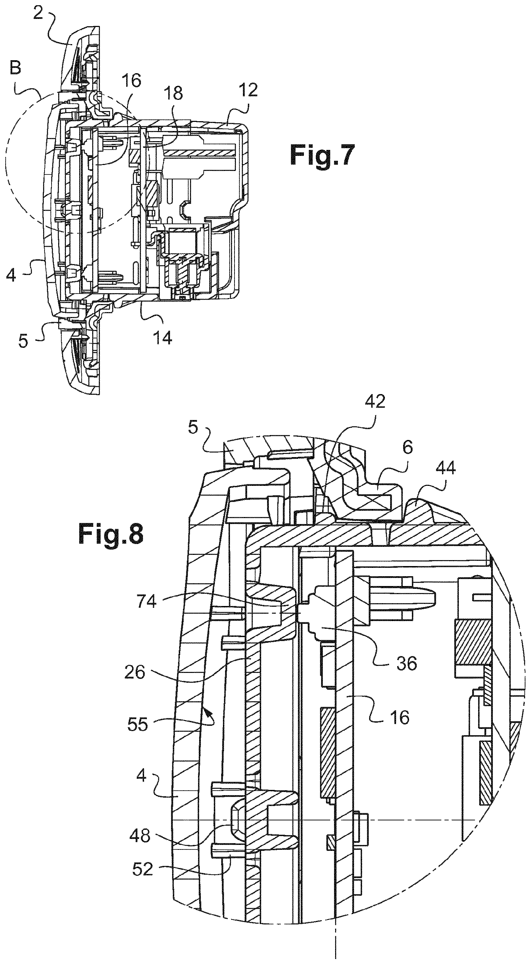

Comme le montrent plus particulièrement les figures 1, 2 et 8, le boîtier 12, 14 du mécanisme d'appareillage 8 (ici précisément le capot 14) comprend par ailleurs (au niveau d'une paroi latérale) une languette d'encliquetage (déformable) 44 afin de retenir le support d'appareillage 6 au contact de la collerette 42 : lors du montage du mécanisme d'appareillage 8 sur le support d'appareillage 6 (à travers l'ouverture centrale 9), la languette d'encliquetage 44 s'efface élastiquement afin de permettre au support d'appareillage 6 de venir au contact de la collerette 42, puis reprend sa position de repos afin de retenir le support d'appareillage 6 au contact de la collerette 42 (voir par exemple la figure 8).

Comme visible sur les figures 2, 5, 8 et 10, la paroi avant 21 du boîtier (ici du capot 14) porte sur sa face avant au moins un pion 48, ici deux tels pions, pour le positionnement du doigt de commande 4. Chacun de ces pions 48 est ici disposé au niveau d'un bord de la paroi avant 21 et est ainsi partiellement entouré d'un évidement 50 destiné à recevoir une nervure de positionnement 52 complémentaire formée sur le doigt de commande 4.

En effet, comme bien visible en figure 6, le doigt de commande 4 présente sur sa face arrière 55 (c'est-à-dire sa face tournée vers le mécanisme d'appareillage 8 lorsque le dispositif de commande est assemblé) en correspondance des pions 48 deux nervures de positionnement 52, réalisées ici en forme de C, de manière à être reçues dans les évidements 50 en entourant partiellement les pions 48.

La face arrière 55 du doigt de commande 4 comporte également des nervures 54, 56, 58, 60 situées respectivement au droit (et ici au contact) de languettes déformables correspondantes 24, 28, 30, 34 lorsque le doigt de commande 4 est monté sur le mécanisme d'appareillage 8.

Comme visible sur les figures 2 et 6, la face arrière 55 du doigt de commande 4 présente par ailleurs quatre autres nervures 61 conçues respectivement pour coopérer (au niveau d'un bord latéral de la nervure 61 concernée) avec quatre surfaces correspondantes 47 du capot 14 (ici quatre surfaces latérales perpendiculaires à la paroi avant 21 et s'étendant à partir de cette paroi avant 21, comme visible en figure 2) afin de guider verticalement le doigt de commande 4 (c'est-à-dire selon une direction perpendiculaire à son axe de pivotement).

Enfin, comme déjà indiqué, un guide de lumière 62, d'extension axiale supérieure à celle des nervures 54, 56, 58, 60 précitées, s'étend à partir de la face arrière 55 du doigt de commande au droit de l'ouverture traversante 46 de manière à s'étendre à travers celle-ci et jusqu'au droit de la source de lumière 40 lorsque le doigt de commande 4 est monté sur le mécanisme d'appareillage 8.

Une pluralité de pattes 66 s'étendent par ailleurs en différents points de la périphérie du doigt de commande 4. Ici, comme bien visible en figure 6, chaque bord (ici de forme arrondie) situé à une extrémité du doigt de commande 4 (dans la longueur du doigt de commande 4) présente deux pattes 66.

Le doigt de commande 4, qui est ici de forme oblongue, comporte par ailleurs un muret 64 qui s'étend vers l'arrière sur toute la périphérie du doigt de commande 4 de manière à venir entourer la paroi avant 21 du boîtier du mécanisme d'appareillage 8 lorsque le doigt de commande 4 est monté sur le mécanisme d'appareillage 8.

Les pattes susmentionnées 66 s'étendent ici à partir du muret 64, en différents points de la périphérie du doigt de commande 4 comme déjà indiqué.

Le muret 64 s'étend d'ailleurs de manière plus importante vers l'arrière au niveau de ces bords (arrondis) d'extrémité que dans les autres régions de la périphérie du doigt de commande 4.

Comme bien visible sur la figure 5, lorsque le doigt de commande 4 est monté sur le boîtier du mécanisme d'appareillage 8, chacune des pattes 66 est reçue dans un évidement correspondant 68 formé dans le boîtier du mécanisme d'appareillage 8 (ici dans le capot 14) à l'arrière immédiat de la paroi avant 21.

Chacune des pattes 66 présente une surface 70 en regard de *(i.e.* tournée vers) la face arrière 55 du doigt de commande 4 (la surface 70 étant donc orientée vers l'avant). Lorsque le doigt de commande 4 est monté sur le mécanisme d'appareillage 8 et au repos, cette surface 70 est au contact d'une surface 72 délimitant l'évidement 68 et tournée à l'opposé du doigt de commande 4 (*i.e.* orientée vers l'arrière), comme bien visible en figure 5.

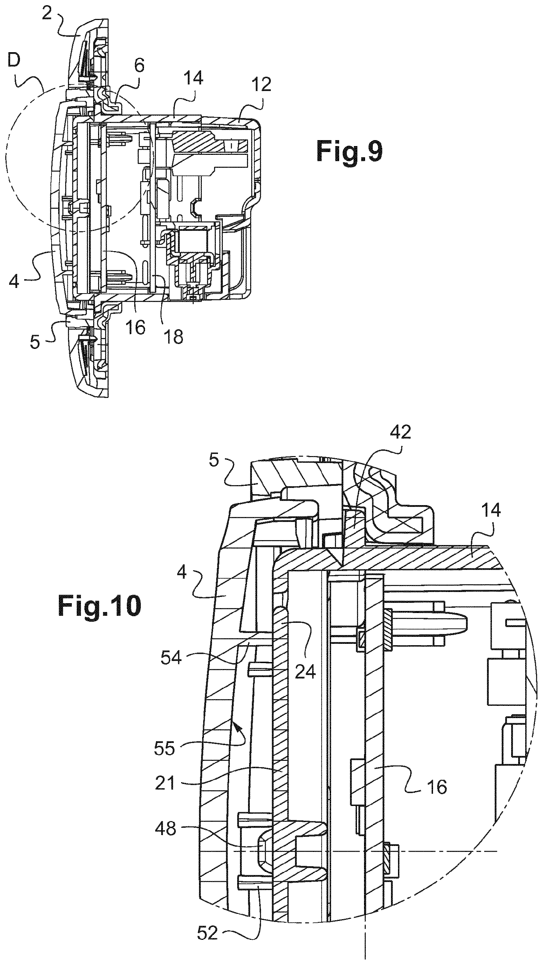

Dans l'exemple décrit ici, lorsque le doigt de commande 4 est en position de repos (*i.e.* n'est pas sollicité par un utilisateur), chacune des nervures 54, 56, 58, 60 est au contact d'une languette déformable 24, 28, 30, 34 correspondante, avec une légère déformation (élastique) de ces languettes déformables 24, 28, 30, 34 (vers le circuit imprimé 16, c'est-à-dire vers l'arrière), comme bien visible en figure 10 pour la nervure 54 et la languette déformable 24.

Ainsi, en position montée sur le boîtier du mécanisme d'appareillage 8, le doigt de commande 4 est en permanence sollicité vers l'avant (grâce à l'élasticité des languettes déformables 24, 28, 30, 34 qui tendent à revenir dans leur position de repos, non déformée) de sorte que la surface 70 de chaque patte 66 est maintenue au contact de la surface correspondante 72 bordant l'évidement 68 formé dans le boîtier du mécanisme d'appareillage 8 (ici dans le capot 14).

Le doigt de commande 4 est retenu de la sorte sur le boîtier 12, 14 du mécanisme d'appareillage 8.

Les pattes 66 (et le muret 64 qui les porte) ont par ailleurs une certaine élasticité afin de pouvoir s'écarter lors du montage du doigt de commande 4 sur le boîtier du mécanisme d'appareillage 8.

Chaque languette déformable 26, 32 située au droit d'un microrupteur 36, 38 comporte ici une excroissance 74 en direction du microrupteur 36, 38 concerné (*i.e.* vers l'arrière) de sorte qu'une partie de la languette déformable 26, 32 (ici l'excroissance 74) se situe à proximité immédiate du microrupteur 36, 38 concerné lorsque le doigt de commande 4 est monté sur le mécanisme d'appareillage 8 et est en position de repos (*i.e.* non sollicité par un utilisateur), comme représenté en figure 8.

Comme visible en figure 2, la paroi avant 21 du capot 14 comporte une première région déformable 76 partiellement délimitée par des découpes 82, 84, 86 de sorte que cette première région déformable 76 n'est reliée aux autres régions de la paroi avant 21 que par des portions 80 de taille réduite (formant charnières) et peut ainsi être déplacée relativement aux autres parties du boîtier 12, 14 du mécanisme d'appareillage 8.

Les languettes déformables 24, 26, 28 (également formées dans la paroi avant 21) s'étendent à partir de cette région déformable 76.

Précisément, la paroi avant 21 présente une découpe (rectiligne) latérale 84 qui définit un bord de la région déformable 76 et un bord de la languette déformable 24. La paroi avant 21 présente par ailleurs une découpe (rectiligne) transverse 88 qui débouche dans la découpe latérale 84 et qui définit le bord d'extrémité libre de la languette déformable 24, le bord d'extrémité libre de la languette déformable 26 et le bord d'extrémité libre de la languette déformable 28. La découpe latérale 84 et la découpe transverse 88 sont ici perpendiculaires.

Toujours sur la figure 2, la languette déformable 24 (située au droit, et ici au contact, de la nervure 54 du doigt de commande 4) et la languette déformable 26 (située au droit du microrupteur 36) sont séparées par une première ouverture (ici rectiligne) 90 qui débouche dans la découpe transverse 88. La première ouverture 90 définit ainsi un bord de la languette déformable 24 et un bord de la languette déformable 26. La première ouverture 90 est ici perpendiculaire à la découpe transverse 88 (et donc parallèle à la découpe latérale 84).

De même, la languette déformable 26 (située au droit du microrupteur 36) et la languette déformable 28 (située au droit, et ici au contact, de la nervure 56 du doigt de commande 4) sont séparées par une seconde ouverture (ici rectiligne) 92. La seconde ouverture 92 définit ainsi un bord de la languette déformable 26 et un bord de la languette déformable 28. La première ouverture 92 est ici perpendiculaire à la découpe transverse 88.

La paroi avant 21 du boîtier (ici du capot 14) présente ici une autre découpe (rectiligne) latérale 86 qui définit un autre bord de la région déformable 76 et un bord de la languette déformable 28. Cette autre découpe latérale 86 débouche dans la découpe transverse 88.

La paroi avant 21 présente enfin une découpe isolée 82 s'étendant entre les deux portions 80 reliant la région déformable 76 au reste de la paroi avant 21. Cette découpe isolée 82 facilite la formation d'une charnière au niveau des portions 82 et ainsi la déformation de la région déformable 76.

Les découpes et ouvertures susmentionnées permettent ainsi de définir dans la paroi avant 21 du boîtier :
- une première languette déformable 24 ;
- une seconde languette déformable 26 ;
- une troisième languette déformable 28.

Les première, seconde et troisième languettes déformables 24, 26, 28 s'étendent ainsi parallèlement et à distance, prises deux à deux.

Précisément, si l'on définit pour chaque languette déformable 24, 26, 28 un axe médian (ou axe d'extension) s'étendant entre une zone de liaison de la languette déformable 24, 26, 28 concernée à la région déformable 76 et le bord d'extrémité libre de la languette déformable 24, 26, 28 concernée, les languettes déformables 24, 26, 28 présentent (deux à deux) des axes médians parallèles et distants l'un de l'autre.

Lorsqu'un utilisateur exerce un effort sur la partie supérieure du doigt de commande 4, les nervures 54, 56 du doigt de commande 4 déplacent les languettes déformables correspondantes 24, 28 vers l'arrière (c'est-à-dire vers l'intérieur du boîtier, ou encore vers le circuit imprimé 16), ce qui entraîne la déformation de la région déformable 76 dans la même direction et par là même le déplacement de la languette déformable 26 vers l'arrière, c'est-à-dire au contact du microrupteur 36 (ici au moyen de l'excroissance 74).

Lorsque le mouvement ainsi généré par l'utilisateur se poursuit vers l'arrière, les languettes déformables 24, 28 se déforment jusqu'à entraîner (via la région déformable 76) une déformation de la languette déformable 26 suffisante pour actionner le microrupteur 36.

L'utilisation d'une languette 24, 28 (au moins) déformée sous l'action du doigt de commande 4 et d'une languette 26 distincte pour l'actionnement de l'interrupteur (ici le microrupteur 36) permet de définir de manière souple la relation entre le mouvement du doigt de commande 4 et l'actionnement de l'interrupteur 36, en jouant en particulier sur la forme de la région déformable 76 et des languettes déformables 24, 26, 28.

Il est ainsi possible notamment de choisir plus librement le déplacement du doigt de commande 4 et l'effort associé nécessaires au déclenchement de l'interrupteur 36. De même, selon le mouvement de la languette 26 obtenu par un déplacement donné du doigt de commande 4, on peut choisir un déclenchement soudain de l'interrupteur 36 ou un déclenchement plus progressif de celui-ci.

Ainsi, en jouant sur la forme de la région déformable 76 et des languettes déformables 24, 26, 28 (c'est-à-dire en jouant sur la forme des découpes 82, 84, 86, 88 et ouvertures 90, 92 susmentionnées), en particulier sur l'écart entre les axes médians de deux languettes déformables 24, 26, 28 voisines, il est possible de modifier le ressenti de l'utilisateur lorsqu'il déplace le doigt de commande (en particulier son ressenti tactile, ainsi qu'éventuellement son ressenti auditif, du fait par exemple du déclenchement soudain ou progressif de l'interrupteur 36).

L'utilisation d'une languette 24, 28 (au moins) déformée sous l'action du doigt de commande 4 et d'une languette 26 distincte pour l'actionnement de l'interrupteur (ici le microrupteur 36) permet en outre d'éviter que l'effort fourni par l'utilisateur ne soit directement transmis à l'interrupteur 36 et risque d'endommager celui-ci.

L'utilisation d'une languette 24, 28 (au moins) déformée sous l'action du doigt de commande 4 et d'une languette 26 distincte pour l'actionnement de l'interrupteur (ici le microrupteur 36) permet également de définir le ressenti de l'utilisateur parmi des possibilités élargies, notamment en faisant varier (sur l'axe médian de la languette concernée) le point de contact des nervures 54, 56 sur la languette 24, 28 associée et/ou le point de la languette 26 actionnant (via l'excroissance 74) l'interrupteur 36.

La paroi avant 21 présente une autre région déformable 94 à partir de laquelle s'étendent les languettes déformables 30, 32, 34.

Comme visible sur la figure 2, la région déformable 84 et les languettes déformables 30, 32, 34 sont réalisées symétriquement de la région déformable 76 et des languettes déformables 24, 26, 28. On pourra dès lors se référer à la description qui précède en ce qui concerne la constitution et le fonctionnement de la région déformable 84 et des languettes déformables 30, 32, 34.

Les découpes et ouvertures formées dans la partie inférieure de la paroi avant 21 permettent ainsi de définir :
- une quatrième languette déformable 30 ;
- une cinquième languette déformable 32 ;
- une sixième languette déformable 34.

Les quatrième, cinquième et sixième languettes déformables 30, 32, 34 s'étendent ainsi parallèlement et à distance, prises deux à deux.

Précisément, si l'on définit pour chaque languette déformable 30, 32, 34 un axe médian (ou axe d'extension) s'étendant entre une zone de liaison de la languette déformable 30, 32, 34 concernée à la région déformable 94 et le bord d'extrémité libre de la languette déformable 30, 32, 34 concernée, les languettes déformables 30, 32, 34 présentent (deux à deux) des axes médians parallèles et distants l'un de l'autre.

Lorsqu'un utilisateur exerce un effort sur la partie inférieure du doigt de commande 4 (éventuellement simultanément à un effort sur la partie supérieure comme décrit plus haut), les nervures 58, 60 du doigt de commande 4 déplacent les languettes déformables correspondantes 30, 34 vers l'arrière (c'est-à-dire vers l'intérieur du boîtier, ou encore vers le circuit imprimé 16), ce qui entraîne la déformation de la région déformable 94 dans la même direction et par là même le déplacement de la languette déformable 32 vers l'arrière, c'est-à-dire au contact du microrupteur 38.

Si le mouvement de la partie inférieure du doigt de commande 4 se poursuit vers l'arrière sous l'action de l'utilisateur, les languettes déformables 30, 34 se déforment jusqu'à entraîner (via la région déformable 94) une déformation de la languette déformable 32 suffisante pour actionner le microrupteur 38.

L'utilisateur peut ainsi commander l'actionnement du microrupteur 36 ou du microrupteur 38, ou encore de ces deux microrupteurs 36, 38, en fonction de la manière dont il exerce un effort sur le doigt de commande 4.

Dans les exemples qui précèdent et comme bien visible en figure 2, sont utilisées deux languettes déformables 24, 28 ; 30, 34 déplacées chacune par une nervure 54, 56 ; 58, 60 du doigt de commande 4 et situées de part et d'autre de la languette déformable 26 ; 32 jusqu'à actionner l'interrupteur 36 ; 38.

Cette disposition permet un bon contrôle du déplacement de la languette déformable 26 ; 32 qui actionne l'interrupteur 36 ; 38. En particulier, la languette déformable 26 ; 32 est précisément déformée selon l'axe d'actionnement de l'interrupteur 36 ; 38.

Il est toutefois envisageable en variante de prévoir une région déformable à partir de laquelle s'étend une unique première languette déformable au contact du doigt de commande et une seconde languette déformable jusqu'à actionner l'interrupteur. En effet, dans ce cas également la déformation de la première languette entraîne une déformation de la région déformable, qui entraîne ainsi une déformation de la seconde languette déformable afin d'actionner l'interrupteur, comme expliqué ci-dessus.

Par ailleurs, bien que dans l'exemple décrit ici le mécanisme d'appareillage 8 porte un seul doigt de commande 4, on peut envisager en variante que plusieurs doigts de commande 4 soient prévus dans la paroi avant du mécanisme d'appareillage 8, le mécanisme d'appareillage 8 étant alors conformé comme décrit ci-dessus (et montré sur les figures) en regard de chacun des doigts de commande utilisés.

## Revendications

1. Dispositif de commande comprenant :
- un boîtier (12, 14) renfermant au moins un interrupteur (36), et
- un doigt de commande (4) mobile par rapport au boîtier (12, 14) et présentant au moins un élément (54) en saillie d'une face (55) du doigt de commande (4) orientée vers le boîtier (12, 14),
**caractérisé en ce que** le boîtier (12, 14) comprend une région déformable (76) à partir de laquelle s'étendent une première languette (24), agencée de manière à coopérer avec ledit élément (54) dans une position au moins du doigt de commande (4), et une seconde languette (26) pour actionner l'interrupteur (36).

2. Dispositif de commande selon la revendication 1, dans lequel la première languette (24) et la seconde languette (26) s'étendent parallèlement l'une à l'autre et à distance l'une de l'autre.

3. Dispositif de commande selon la revendication 1 ou 2, dans lequel le doigt de commande (4) comprend un autre élément en saillie (56) et dans lequel une troisième languette (28) s'étend à partir de la région déformable (76) et au droit dudit autre élément (56).

4. Dispositif de commande selon la revendication 3, dans lequel la première languette (24) et la troisième languette (28) sont situées de part et d'autre de la seconde languette (26).

5. Dispositif de commande selon l'une des revendications 1 à 4, dans lequel la première languette (24) et la seconde languette (26) sont déformables.

6. Dispositif de commande selon l'une des revendications 1 à 5, dans lequel le doigt de commande (4) comporte une patte (66) reçue dans un évidement (68) du boîtier (12, 14) et présentant une première surface de contact (70) orientée vers ladite face (55) du doigt de commande (4), la première languette (24) étant élastique et au contact dudit élément (54) de manière à plaquer la première surface de contact (70) contre une seconde surface de contact (72) formée sur le boîtier (12, 14) et délimitant ledit évidement (68).

7. Dispositif de commande selon l'une des revendications 1 à 6, dans lequel la région déformable (76), la première languette (24) et la seconde languette (26) sont formées dans une paroi avant (21) du boîtier (12, 14).

8. Dispositif de commande selon la revendication 7, dans lequel le doigt de commande (4) comporte un muret (64) s'étendant sur la périphérie du doigt de commande (4) en entourant ladite paroi avant (21).

9. Dispositif de commande selon l'une des revendications 1 à 8, dans lequel l'interrupteur (36) est porté par un circuit imprimé (16) monté dans le boîtier (12, 14).

10. Dispositif de commande selon l'une des revendications 1 à 9, dans lequel l'interrupteur est un microrupteur (36).

11. Dispositif de commande selon l'une des revendications 1 à 10, dans lequel la seconde languette déformable (26) présente une excroissance (74) orientée vers l'interrupteur (36).

12. Dispositif de commande selon l'une des revendications 1 à 11, dans lequel la région déformable (76) est délimitée partiellement par une pluralité de découpes (82, 84, 86).

13. Dispositif de commande selon l'une des revendications 1 à 12, dans lequel ladite face (55) du doigt de commande (4) comporte un élément supplémentaire (58) en saillie et dans lequel le boîtier (12, 14) comprend une autre région déformable (94) à partir de laquelle s'étendent une quatrième languette (30), agencée de manière à coopérer avec ledit élément supplémentaire (58), et une cinquième languette (32) pour actionner un autre interrupteur (38).

14. Dispositif de commande selon l'une des revendications 1 à 13, dans lequel le boîtier (12, 14) comporte au moins un pion (48) partiellement entouré par un évidement (50) et dans lequel ladite face (55) du doigt de commande (4) comporte une nervure de positionnement (52) reçue dans ledit évidement (50).

## Patentansprüche

1. Steuerungsvorrichtung mit
- einem Gehäuse (12, 14), das wenigstens einen Schalter (36) in sich birgt, und
- einem Schaltfinger (4), der gegenüber dem Gehäuse (12, 14) beweglich ist und wenigstens ein aus einer zum Gehäuse (12, 14) hin gerichteten Seite (55) des Schaltfingers (4) hervorstehendes Element (54) aufweist,
**dadurch gekennzeichnet, daß** das Gehäuse (12, 14) eine verformbare Zone (76) aufweist, von der aus sich eine erste Zunge (24), die so ausgeführt ist, daß sie mit dem Element (54) in wenigstens einer Stellung des Schaltfingers (4) zusammenwirkt, und eine zweite Zunge (26) zum Betätigen des Schalters (36) erstrecken.

2. Steuerungsvorrichtung gemäß Anspruch 1, **dadurch gekennzeichnet, daß** sich die erste Zunge (24) und die zweite Zunge (26) parallel zueinander und in einem Abstand voneinander erstrecken.

3. Steuerungsvorrichtung gemäß Anspruch 1 oder 2, **dadurch gekennzeichnet, daß** der Schaltfinger (4) ein weiteres hervorstehendes Element (56) aufweist und daß sich eine dritte Zunge (28) von der verformbaren Zone (76) aus und an der Stelle des anderen Elements (56) erstreckt.

4. Steuerungsvorrichtung gemäß Anspruch 3, **dadurch gekennzeichnet, daß** die erste Zunge (24) und die dritte Zunge (28) beiderseits der zweiten Zunge (26) angeordnet sind.

5. Steuerungsvorrichtung gemäß einem der Ansprüche 1 bis 4, **dadurch gekennzeichnet, daß** die erste Zunge (24) und die zweite Zunge (26) verformbar sind.

6. Steuerungsvorrichtung gemäß einem der Ansprüche 1 bis 5, **dadurch gekennzeichnet, daß** der Schaltfinger (4) eine Auskragung (66) aufweist, die in eine Öffnung (68) des Gehäuses (12, 14) eingreift und eine zur besagten Seite (55) des Schaltfingers (4) gerichtete erste Kontaktfläche (70) aufweist, wobei die erste Zunge (24) elastisch ist und mit dem besagten Element (54) Kontakt hat, um die erste Kontaktfläche (70) gegen eine am Gehäuse (12, 14) geformte und die Öffnung (68) begrenzende zweite Kontaktfläche (72) zu drücken.

7. Steuerungsvorrichtung gemäß einem der Ansprüche 1 bis 6, **dadurch gekennzeichnet, daß** die verformbare Zone (76), die erste Zunge (24) und die zweite Zunge (26) in einer Vorderwandung (21) des Gehäuses (12, 14) ausgeformt sind.

8. Steuerungsvorrichtung gemäß Anspruch 7, **dadurch gekennzeichnet, daß** der Schaltfinger (4) einen sich über den Umfang des Schaltfingers (4) erstreckenden und die Vorderwandung (21) umgebenden Steg (64) aufweist.

9. Steuerungsvorrichtung gemäß einem der Ansprüche 1 bis 8, **dadurch gekennzeichnet, daß** der Schalter (36) von einer im Gehäuse (12, 14) angebrachten gedruckten Schaltung (16) getragen wird.

10. Steuerungsvorrichtung gemäß einem der Ansprüche 1 bis 9, **dadurch gekennzeichnet, daß** der Schalter ein Mikroschalter (36) ist.

11. Steuerungsvorrichtung gemäß einem der Ansprüche 1 bis 10, **dadurch gekennzeichnet, daß** die zweite verformbare Zunge (26) eine zum Schalter (36) hin gerichtete Auskragung (74) aufweist.

12. Steuerungsvorrichtung gemäß einem der Ansprüche 1 bis 11, **dadurch gekennzeichnet, daß** die verformbare Zone (76) teilweise von einer Anzahl Ausschnitten (82, 84, 86) begrenzt ist.

13. Steuerungsvorrichtung gemäß einem der Ansprüche 1 bis 12, **dadurch gekennzeichnet, daß** die besagte Seite (55) des Schaltfingers (4) ein zusätzliches hervorstehendes Element (58) aufweist und daß das Gehäuse (12, 14) eine weitere verformbare Zone (94) aufweist, von der aus sich eine vierte Zunge (30), die so ausgeführt ist, daß sie mit dem zusätzlichen Element (58) zusammenwirkt, und eine fünfte Zunge (32) zum Betätigen eines weiteren Schalters (38) erstrecken.

14. Steuerungsvorrichtung gemäß einem der Ansprüche 1 bis 13, **dadurch gekennzeichnet, daß** das Gehäuse (12, 14) wenigstens einen teilweise von einer Öffnung (50) umgebenen Zapfen (48) aufweist und daß die besagte Seite (55) des Schaltfingers (4) eine von der Öffnung (50) aufgenommene Positionierrippe (52) aufweist.

## Claims

1. A control device comprising:
• a casing (12, 14) that contains at least one switch (36); and
• a control member (4) that is movable relative to the casing (12, 14) and that presents at least one element (54) that projects from a face (55) of the control member (4), which face is oriented towards the casing (12, 14);
the control device being **characterized in that** the casing (12, 14) includes a deformable region (76) from which there extend a first tongue (24) that is arranged so as to co-operate with said element (54) in at least one position of the control member (4), and a second tongue (26) for actuating the switch (36).

2. A control device according to claim 1, wherein the first tongue (24) and the second tongue (26) extend parallel to each other, and spaced apart from each other.

3. A control device according to claim 1 or claim 2, wherein the control member (4) includes another projecting element (56), and wherein a third tongue (28) extends from the deformable region (76) and in register with said other element (56).

4. A control device according to claim 3, wherein the first tongue (24) and the third tongue (28) are situated on either side of the second tongue (26).

5. A control device according to any one of claims 1 to 4, wherein the first tongue (24) and the second tongue (26) are deformable.

6. A control device according to any one of claims 1 to 5, wherein the control member (4) includes a catch (66) that is received in a recess (68) of the casing (12, 14) and that presents a first contact surface (70) that is oriented towards said face (55) of the control member (4), the first tongue (24) being resilient and in contact with said element (54) so as to press the first contact surface (70) against a second contact surface (72) that is formed on the casing (12, 14) and that defines said recess (68).

7. A control device according to any one of claims 1 to 6, wherein the deformable region (76), the first tongue (24), and the second tongue (26) are formed in a front wall (21) of the casing (12, 14).

8. A control device according to claim 7, wherein the control member (4) includes a rim (64) that extends over the periphery of the control member (4), surrounding said front wall (21).

9. A control device according to any one of claims 1 to 8, wherein the switch (36) is carried by a printed circuit (16) that is mounted in the casing (12, 14).

10. A control device according to any one of claims 1 to 9, wherein the switch is a microswitch (36).

11. A control device according to any one of claims 1 to 10, wherein the second deformable tongue (26) presents a projection (74) that is oriented towards the switch (36).

12. A control device according to any one of claims 1 to 11, wherein the deformable region (76) is defined in part by a plurality of cutouts (82, 84, 86).

13. A control device according to any one of claims 1 to 12, wherein said face (55) of the control member (4) includes an additional projecting element (58), and wherein the casing (12, 14) includes another deformable region (94) from which there extend a fourth tongue (30) that is arranged so as to co-operate with said additional element (58), and a fifth tongue (32) for actuating another switch (38).

14. A control device according to any one of claims 1 to 13, wherein the casing (12, 14) includes at least one peg (48) that is surrounded in part by a recess (50), and wherein said face (55) of the control member (4) includes a positioner tab (52) that is received in said recess (50) .
